(19) Europäisches Patentamt
European Patent Office
Office européen des brevets

(11) **EP 4 787 253 A1**

(12) **EUROPEAN PATENT APPLICATION**

(43) Date of publication:
05.08.2026 Bulletin 2026/32

(21) Application number: 25154945.7

(22) Date of filing: **30.01.2025**

(51) International Patent Classification (IPC):
*G06Q 10/04* (2023.01)     *B60L 53/64* (2019.01)
*B60L 53/67* (2019.01)     *B60L 53/68* (2019.01)
*G06Q 10/06* (2023.01)     *G06Q 10/0631* (2023.01)
*G06Q 50/00* (2024.01)     *G06Q 50/06* (2024.01)
*H02J 7/00* (2026.01)

(52) Cooperative Patent Classification (CPC):
**G06Q 10/06; B60L 53/64; B60L 53/67; B60L 53/68;
G06Q 10/04; G06Q 10/06312; G06Q 50/00;
G06Q 50/06; H01M 10/425; H01M 10/44;
H02J 7/82; H02J 7/92;** H01M 2010/4271;
H01M 2220/20; H02J 2105/37

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventor: **Akaber, Parisa
Hebburn NE31 1LX (GB)**

(74) Representative: **Siemens Patent Attorneys
Postfach 22 16 34
80506 München (DE)**

(54) **SCHEDULING PLATFORM FOR AN ELECTRIC VEHICLE (EV) FLEET CHARGING DEPOT**

(57)     A scheduling platform for an electric vehicle fleet charging depot based on a Mixed-Integer Linear Programming (MILP) approach is described. The electric vehicle fleet is a public service vehicle fleet, such as a bus fleet, in an urban or extra-urban setting.

# FIG 1

**Description**

The present invention relates to a computer-implemented scheduling platform for an electric vehicle (EV) fleet charging depot, in particular, a computer-implemented scheduling platform for an EV fleet based on a set of pre-defined operating objectives.

In recent years, the number of public service vehicles, such as buses, transitioning to all-electric vehicle (EV) fleets has increased dramatically. Electrification of depots for public transportation and commercial vehicles is a key step towards achieving a sustainable and efficient transportation system. By converting to electric vehicles emissions responsible for greenhouse gases can be reduced, and some mitigation of climate change effects can be achieved. In addition, the public perception of such transportation and commercial vehicle usage is im-proved since the vehicle owners are able to demonstrate a commitment to sustainability and environmental awareness. However, there are a series of challenges that come with the electrification of a fleet of vehicles, particularly a large fleet of vehicles. In all EV fleet charging depots, logistical issues take precedence when planning charging. These include not just load balancing in the EVs themselves but the effect of the load on the local electricity grid and electricity pricing issues, and the physical constraints inherent in setting up parking bays with EV chargers within a depot setting. A different issue is being able to allocate routes to an EV such as a bus based upon its battery storage capacity and the amount of charge that will be consumed during operation. Another is being able to schedule charging and balancing of the EV batteries in the most cost-effective and timely manner. There is therefore a need for an integrated multi-stage framework for smart charging scheduling, load management and logistics that takes all of this into account and provides a depot owner or operator with the optimum usage of the EV fleet.

The embodiments of the present invention aim to address this issue by providing, in a first aspect, a computer-implemented scheduling platform for an electric vehicle (EV) fleet charging depot, based on a set of pre-defined operating parameters and input parameters, comprising: executing a day-ahead logistic block for determining physical access to charging infrastructure; executing a day-ahead planner block, for determining a balanced depot charging configuration, comprising charging scheduling and load management based on EV battery charging profiles, EV charging requirements and charging infrastructure restrictions; and outputting a balanced depot charging schedule for the EV charging depot, wherein the schedule includes the overall optimum configuration of charging infrastructure for the EV charging depot at any one time for the pre-defined operating parameters and input parameters; wherein the scheduling method implements a mixed-integer linear programming (MILP) model.

The balanced depot charging configuration comprises charging scheduling and load management based on the actual EV battery charging profiles, EV charging requirements and charging infrastructure restrictions of each EV in the fleet independently as well as the configuration of the EV fleet charging depot itself. This results in the balanced depot charging configuration being dynamic and re-configurable in real-time based on changes in the minute-by-minute operational capabilities of the entire EV fleet.

Preferably, executing the day-ahead logistic block comprises defining the physical access to charging infrastructure as a multi-objective problem as a series of linear equations and a set of linearised non-linear constraints.

Preferably, executing the day-ahead logistic block further comprises solving the multi-objective problem and outputting the result to the day-ahead planner block.

Preferably, executing the day-ahead planner block comprises: based on the input from the day-ahead logistic block: executing a continuous charging and cell-balancing model; and executing a battery charging profile model. Alternatively, executing the day-ahead planner block comprises: based on the input from the day-ahead logistic block: executing a non-continuous charging and cell-balancing model; and executing a battery charging profile model.

Preferably, the method further comprises checking the real-time depot charging configuration at set time intervals; if the real-time depot charging configuration deviates from the balanced charging schedule above a pre-determined threshold, triggering the execution of an intra-day re-planner block for determining event-based charging schedule adjustments, and adjusting the optimum charging configurations and balanced depot charging schedule on the basis of the event-based charging schedule adjustments.

Preferably, checking the real-time depot charging configuration comprises collecting data regarding the time of an EV arrival, the actual state of charge (SoC) of the EV battery system and a status of the EV charger and connector scheduled for use by the EV.

Preferably, the triggering the execution of the intra-day re-planner block comprises: determining the EVs affected by the deviation between the real-time charging configuration and the balanced charging schedule; preparing data required to determine rescheduling and charging infrastructure reconfiguration requirements; and calling the intra-day planner for execution on the basis of the prepared data.

Preferably, the execution of the intra-day re-planner comprises: determining event-based charging schedule adjustments and charging infrastructure configuration adjustments on the basis of the prepared data; checking whether the schedule and configuration adjustments overcome the deviation between the real-time charging configuration and the balanced charging schedule and charging infrastructure configurations for the affected EVs. Preferably, if the schedule adjustments do not overcome the deviation, the method further comprises: executing a feedback loop comprising: exiting the intra-day re-planner block; revising the data required to determine rescheduling and charging infrastructure reconfiguration requirements; and recalling the intra-day re-planner block and executing on the basis of the revised data. More preferably, the method further comprises repeating the feedback loop until the deviation between the real-time charging configuration and the balanced charging schedule and charging structure infrastructure configurations is minimised to below the pre-determined threshold.

Preferably, the input parameters are the physical and operational attributes of a fleet of EVs operating from the EV charging depot.

Preferably, the operating parameters comprise the number of EVs to be charged and the available charging infrastructure.

Preferably, the EV is a public service vehicle.

Embodiments of the present invention also provide, in a second aspect, an electric vehicle (EV) fleet depot charging system, comprising: a plurality of EV chargers; a communications network; and a server hosting a computer-implemented scheduling platform for scheduling EV charging in the depot as outlined above, wherein the plurality of EV chargers and the server are connected in a network by, and adapted to exchange data via, the communications network.

Preferably, the server is a cloud server or distributed computing system.

Embodiments of the present invention also provide, in a third aspect, a method of infrastructure planning for an Electric Vehicle (EV) charging depot, comprising: defining a set of pre-determined operating parameters including the number of EVs to be charged and the available charging infrastructure; executing a day-ahead logistic block for determining physical access to charging infrastructure; executing a day-ahead planner block, for determining a balanced depot charging configuration, comprising charging scheduling and load management based on EV battery charging profiles, EV charging requirements and charging infrastructure restrictions; and outputting a balanced depot charging schedule for the EV charging depot, wherein the schedule includes the overall optimum configuration of charging infrastructure for the EV charging depot at any one time for the pre-defined operating parameters; determining the required grid connection for the balanced depot charging schedule for the EV charging depot; wherein the scheduling method implements a mixed-integer linear programming (MILP) model.

The present invention will now be described by way of example only, and with reference to the accompanying drawings, in which:

Figure 1 is a schematic overview of a scheduling platform for an electric vehicle (EV) fleet charging depot in accordance with an embodiment of the present invention;

Figure 2 is a schematic representation of the availability, scheduled charging and balancing of an EV in a continuous charging approach;

Figure 3 is a schematic representation of the availability, scheduled charging and balancing of an EV in a non-continuous charging approach;

Figure 4a is a chart illustrating an EV battery charging profile based on data from an EV charger during use;

Figure 4b is a chart showing a modelled EV battery charging profile based on the data in Figure 4a;

Figure 5 is a schematic illustration of a triggering algorithm for triggering a day re-planner;

Figure 6 is a schematic overview of a n electric vehicle (EV) fleet depot charging system in accordance with embodiments of the present invention; and

Figure 7 illustrates a method of infrastructure planning for an Electric Vehicle (EV) charging depot in accordance with embodiments of the present invention.

The embodiments of the present invention take the approach that computer-implemented scheduling platform for an electric vehicle (EV) fleet charging depot can be created based on a set of pre-defined operating parameters and input parameters. Firstly, a day-ahead logistic block for determining physical access to charging infrastructure is executed. Next, a day-ahead planner block, for determining a balanced depot charging configuration, is executed. This comprises charging scheduling and load management based on EV battery charging profiles, EV charging requirements and charging infrastructure restrictions. A balanced depot charging schedule for the EV charging depot is then output, where the schedule includes the overall optimum configuration of charging infrastructure for the EV charging depot at any one time for the pre-defined operating parameters. This is achieved by the scheduling method implementing a mixed-integer linear programming (MILP) model. This will now be described in further detail below.

In the embodiments of the present invention, a data-informed EV fleet charging platform for use at an EV fleet charging depot is modelled as a multi-stage Mixed-Integer Linear Programming (MILP)-based optimisation problem. Each EV fleet component, such as the EV battery, the chargers/connectors available in an EV fleet charging depot and the grid connection available at an EV fleet charging depot is modelled as a set of linearised equations considering all the relevant technical and operational characteristics. In addition, proper linearisation approaches are applied as required to linearise non-linear constraints and convert the initial MILP model to a scalable version. Although the model may be scaled for any EV fleet charging depot charging situation, preferably the EVs are public service vehicles, in particular, buses.

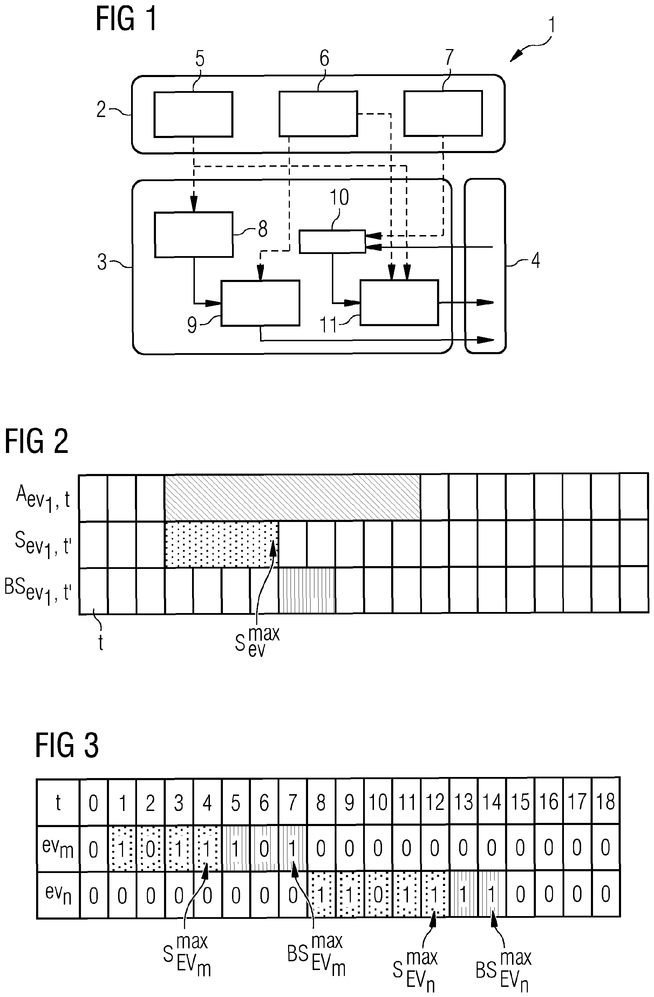

Figure 1 is a schematic overview of a scheduling platform for an electric vehicle (EV) fleet charging depot in accordance with an embodiment of the present invention. The scheduling platform 1 is divided into three regions: a data layer 2, a framework layer 3 and an output layer 4. Within the data layer 2 sit data blocks containing the data required for the various steps of the scheduling process. A first data block 5 provides information relating to the EV fleet charging depot layout, the route data and user defined objectives relating to route mapping. A second data block 6 provides information relating to the charger configuration within the EV fleet charging depot, the configuration of individual EVs (such as battery charge capacity), schedule information for the routes, user defined objectives relating to scheduling and charging, EV fleet charging depot specific parameters (such as the infrastructure available) and third-party energy prices. The third data block 7 provides real-time data, including the arrival time of an EV at the EV fleet charging depot, any maintenance requirements and the arrival state of charge (SoC) of each EV.

The framework layer 4 comprises four main components used in the scheduling process. The first stage comprises a day-ahead logistic block 8, which takes care of EV-route mapping, EV-parking allocation and EV-connector mapping, and takes data from the first data block 5. This deals with infrastructure requirements and constraints in solving EV route mapping and charging scheduling. The day-ahead logistic block 8 feeds information into a day-ahead planner block 9, which also takes data from the second data block 6. This second stage deals with the charging scheduling and load management of the EVs taking into account EV charging profiles and the infrastructure constraints such as the EV fleet charging depot grid connection capacity, location and energy prices. This generates a result into the output layer 4, which includes multi-objective day ahead scheduling determined using an additional charging profile and battery-balancing model, taking into account sequential charging. However, during operation, as real-time data is received, both the third data block 7 and the output layer 4 feed scheduling and real-time information into a triggering algorithm 10. The triggering algorithm 10 determines whether or not there is a need to adjust an intra-day charging schedule based upon the real-time data received, and enables the reconsideration of the schedule based on real-time uncertainties (such as weather, traffic, passenger numbers and the like). This real-time data includes information such as EV arrival times at the EV fleet charging depot and EV SoC on arrival. If there is a need to make this adjustment, at stage 3 an intra-day re-planner 11 takes data is designed as an event-based charging schedule adjuster. The intra-day re-planner takes data from both the first data block 5 and the second data block 6 to capture real-time data via the triggering algorithm 10 to output an adjusted day-ahead charging schedule and adjusted EV route, parking and connector mapping to the output layer 4. Each of these stages will now be considered in more detail.

**List of Notation, Parameters and Decision Variables**

<u>Notations</u>

| | |
|---|---|
| *ev:* | electric vehicle, preferably a bus |
| *EV:* | set of all electric vehicles |
| *cg:* | EV charger |
| *Cg:* | set of all EV chargers |
| *t:* | timeslot |
| *T*: | set of all timeslots |
| *d:* | duration of timeslot |
| *cn:* | connector |
| *Cn:* | set of all connectors |
| *Ca:* | available connector |
| *r:* | route |
| *R:* | set of all routes |
| *p*: | parking slot |
| *P*: | set of all parking slots |

<u>Parameters</u>

$A[EV \times T]$: EV charging availability matrix

$A_{ev,t}$: 1 if an EV *ev* is available for charging at time *t*, 0 otherwise

$SoC_{ev}^{initial}$ : EV battery initial state of charge

$SoC_{ev}^{final}$ : EV battery required final state of charge

$SoC^{break}[EV]$:      breakpoint SoC

$\delta^{break}[EV \times T]$:      binary required for battery charging profile model

$N_{BS}$:      number of required balancing timeslots

$R^{Pfinish}[R]$:      route finish timeslot of the previous day

$R^{start}[R]$:      route start timeslot of the next day

$EV^{arrival}[EV]$:      EV arrival timeslot

$Dis^{R}$:      route distance in km

$R^{evType}[R]$:      route EV requirement

$D^{max}[EV]$:      EV maximum distance capability

$T^{charging}[EV]$:      number of timeslots required for an EV to charge

$EV^{driven}[REV]$:      distance driven by EV in km

Decision Variables

$SoC^{start}_{ev,t}$ :      SoC of EV *ev* at the start of timeslot *t*

$SoC^{break}$:      breakpoint SoC for EV *ev*

$PowerLimit^{break}_{ev}$ :      power set point limit after the breakpoint limit for EV *ev*

$PowerEV^{in}_{ev,t}$ :      power set point for charging bus $ev \in EV$ at timeslot $t \in T$

$P^{max}_{ev,t}$ :      maximum allowed power level limit $S[EV \times T]$ (charging status indicator)

$S_{ev,t} = \begin{cases} 1 \\ 0 \end{cases}$      value of 1 if EV bus $ev \in EV$ is charging at timeslot $t \in T$, 0 otherwise

$S^{max}_{ev}$ :      last timeslot of charging

$BS^{max}_{ev}$ :      last timeslot of balancing

$W^{S}[EV \times T]: W^{S}_{ev,t}$ :      binary required for linearisation

$W^{BS}[EV \times T]: W^{BS}_{ev,t}$ :      binary required for linearisation

$BS[EV \times T]$:      balancing timeslot indicator

$BS_{ev,t} = \begin{cases} 1 \\ 0 \end{cases}$ :      value of 1 if battery of EV *ev* is in balancing mode at timeslot *t*, 0 otherwise

$EVRoute[EV \times T]$:      EV-route mapping binary

$EVRoute_{ev,r} = \begin{cases} 1 \\ 0 \end{cases}$ :      value of 1 if EV *ev* is allocated to route *r*, 0 otherwise

$EVParking[EV \times T]$:      EV-parking mapping binary

$EVParking_{ev,r} = \begin{cases} 1 \\ 0 \end{cases}$ :      value of 1 if EV *ev* is allocated to parking slot *p*, 0 otherwise

$P^{startOcu}[P]$:      integer indicating the start of occupancy of parking slots

$P^{endOcu}[P]$:      integer indicating the end of occupancy of parking slots

$\delta^{max}_{EV}$ :      maximum distance planned and driven by EV

$\delta^{min}_{EV}$ :      minimum distance planned and driven by EV

Stage 1: Day-Ahead Logistic Block 8

When using an MILP-based model, an objective-based problem or a group of multi-objective problems is used as the basis of the calculation. In this case, the aim is to map EVs to routes, parking slots and chargers/connectors with a main objective of maximising the utilisation (driven distance) of the EVs. This is done on the basis that a set of routes having schedule, distance and vehicle requirements, a specific EV fleet charging depot configuration (layout, chargers, connectors, grid connection capacity) and a fleet of vehicles containing both EVs and vehicles with conventional combustion engines are the operational requirements of such a map. Executing the day-ahead logistic block 8 therefore comprises defining the physical access to charging infrastructure as a multi-objective problem in a series of linear equations and a set of linearised non-linear constraints. This objective is represented by Equation 1:

$$Maximise \sum_{ev \in EV} \sum_{r \in R} Dis_r^R * EVRoute_{ev,r}$$

Where $ev$ is an electric vehicle (EV), $EV$ is the set of all electric vehicles (EV), $r$ is a route, R is the set of all routes $r$, $Dis_r^R$ is the route distance in km for a route $r$, and $EVRoute_{ev,r}$ is a decision variable that will take a value of 1 if an EV is allocated to a route and a value of 0 otherwise.

This problem is also defined as a multi-objective problem for two cases:

- maximising the number of high-priority routes served by EVs then maximising the utilisation of EVs, as in Equation 2:

$$Maximise \sum_{r \in R^p} \sum_{ev \in EV} EVRoute_{ev,p}, Maximise \sum_{ev \in EV} \sum_{r \in R} Dis_r^R * EVRoute_{ev,r}$$

where p is a parking slot;
- maximising the utilisation of EVs then balancing the distance served by all EVs, as in Equations 3, 4a and 4b:

$$Maximise \sum_{ev \in EV} \sum_{r \in R} Dis_r^R * EVRoute_{ev,r}, \quad Minimise\ \delta_{EV}^{max} - \delta_{EV}^{min}$$

$$\delta_{EV}^{max} = \max_{ev \in EV} \left( EV^{drove} ev + \sum_{r \in R} Dis_r^R * EVRoute_{ev,r} \right)$$

$$\delta_{EV}^{min} = \min_{ev \in EV} \left( EV^{drove} ev + \sum_{r \in R} Dis_r^R * EVRoute_{ev,r} \right)$$

where $EV^{drove}$ is the distance driven by an EV, $\delta_{EV}^{max}$ is the maximum distance planned for and driven by an EV and $\delta_{EV}^{min}$ is the minimum distance planned for and driven by an EV. However, it is possible to choose other objectives using such a multi-objective problem approach, such as minimising charging time, minimising the peak grid load/power draw or minimising the cost of electricity drawn from the grid.

These objectives are subject to a number of constraints, as indicated in Equations 5 to 11:

- each EV should be allocated to a maximum of one route and each route served by a single EV (Equation 5):

$$\sum_{r \in R} EVRoute_{ev,r} \leq 1\ \forall ev \in EV, \sum_{ev \in EV} EVRoute_{ev,r} \leq 1\ \forall r \in R$$

- each EV has a maximum distance limit ($D_{ev}^{max}$, based upon its battery storage capacity and efficiency (Equation 6):

$$\sum_{ev \in EV} Dis_r^R * EVRoute_{ev,r} < D_{ev}^{max}\ \forall ev \in EV$$

- each EV should be allocated to a single parking slot p and if there is a route allocated to an EV then there should also be a parking slot *p allocated* (Equation 7):

$$\sum_{ev \in EV} EVParking_{ev,p} \leq 1, \sum_{p \in P} EVParking_{ev,p} = \sum_{r \in R} EVRoute_{ev,r}\ \forall ev \in EV$$

where *EVParking*$_{ev,p}$ has a value of 1 if an EV is assigned a parking slot and a value of 0 otherwise.

- Equations 8, 9 and 10 represent the use of a FIFO (first in first out) parking layout, which is used as a standard layout commonly in large cities, such as London:

$$P_p^{startOcu} \leq P_{p+1}^{startOcu}, P_p^{endOcu} \leq P_{p+1}^{endOcu}$$

$$P_p^{startOcu} = \sum_{ev \in EV} EVParking_{ev,p} * EV_{ev}^{arrival} + \left(1 - \sum_{ev \in EV} EVParking_{ev,p}\right) * M \quad \forall p \in P$$

$$P_p^{endOcu} = \sum_{ev \in EV} \sum_{r \in R} EVParking_{ev,p} * EVRoute_{ev,r} * R_r^{start} + \left(1 - \sum_{ev \in EV} EVParking_{ev,p}\right) * M$$

$$\forall p \in P_r$$

To respect a FIFO layout, assigning adjoining parking slots is done on the basis that the arrival time of the first EV is prior to the arrival time of the second EV, and the departure time of the first EV is also prior to the departure time of the second EV. The term $(1 - \Sigma_{ev \in EV} EVParking_{ev,p}) * M$ ensures that the parking slots at the end of a line of parking slots stays unassigned to facilitate this, where M is an integer representing the total number of parking slots P.

- Finally, each EV must have sufficient time charging whilst routes are being assigned, as indicated by Equation 11:

$$\sum_{r \in R} EVRoute_{ev,r} * R_r^{start} \geq EV_{ev}^{arrival} + T_{ev}^{charging} \quad \forall ev \in EV$$

One issue that the model deals with is the need to balance the allocated distances to each EV over a fixed period of time, such as a month or year. This is done, using Equations 3, 4a and 4b above, by considering an objective of making the value of the total number of kilometres driven by an EV as close as possible to the average value of the number of kilometres driven by all EVs in an EV fleet. This is illustrated in Table 1 below for a three EV example. Initially, each EV has zero kilometres on the clock, hence $EV^{drivenkm} = 0$. Three routes are to be allocated on day one, route R1 is 50km long, route R2 is 150km long and route R3 is 200km long. Initially the first EV, EV$_1$, is allocated route R1, so $EV_1^{drivenkm} = 50$, the second EV, EV$_2$, is allocated route R2, so $EV_2^{drivenkm} = 150$, and the third EV, EV3, is allocated route R3, so $EV_2^{drivenkm} = 200$. Table 1 shows the possible route allocations for day two:

Table 1 possible route allocations for day two illustrating distance balancing

| Route Allocation Option | $EV_{ev}^{drivenkm} + EV_{ev}^{assignedkm}$ | | RouteAllocationOption | $EV_{ev}^{drivenkm} + EV_{ev}^{assignedkm}$ | |
|---|---|---|---|---|---|
| **Option 1** | | | **Option 4** | | |
| EV$_1$ - R1 | 100 | | EV$_1$ - R2 | 200 | |
| EV$_2$ - R2 | 300 | | EV$_2$ - R3 | 350 | |
| EV$_3$ - R3 | 400 | Objective value=300 | EV$_3$ - R1 | 250 | Objective value=150 |
| **Option 2** | | | **Option 5** | | |
| EV$_1$ - R1 | 100 | $\delta_{EV}^{max}$=350 | EV$_1$ - R3 | 250 | $\delta_{EV}^{min}$=100 |
| EV$_2$ - R3 | 350 | $\delta_{EV}^{min}$=200 | EV$_2$ - R1 | 200 | $\delta_{EV}^{max}$=350 |
| EV$_3$ - R2 | 350 | Objective value=250 | EV$_3$ - R2 | 350 | Objective value=150 |
| **Option 3** | | | **Option 6** | | |
| EV$_1$ - R2 | 200 | $\delta_{EV}^{max}$=400 | EV$_1$ - R3 | 250 | $\delta_{EV}^{max}$=350 |
| EV$_2$ - R1 | 200 | $\delta_{EV}^{min}$=200 | EV$_2$ - R2 | 300 | $\delta_{EV}^{min}$=250 |
| EV$_3$ - R3 | 400 | Objective value=200 | EV$_3$ - R1 | 250 | Objective value=100 |

It can be seen from Table 1 that the most appropriate route allocation option for day two is that $EV_1$ serves route R3, $EV_2$ serves route R2 and $EV_3$ serves route R1, since this gives the minimum value for the difference between $\delta_{EV}^{max}$ and $\delta_{EV}^{min}$.

As an example, a series of routes (R0 to R9) of differing lengths and schedules may be allocated to an EV depending upon the EV battery capacity and maximum distance limit. In a depot, there are five parking slots, numbered P0 to P4, with P4 positioned at the entrance to the parking slots and P0 positioned at the exit. Table 2 below indicates the input information required for the day ahead logistic block 8 (times are given in the twenty-four hour clock):

Table 2: Input data for day-ahead logistic block planning

| EV ID | Maximum Distance Available (km) | | |
|---|---|---|---|
| EV0 | 170 | | |
| EV1 | 170 | | |
| EV2 | 170 | | |
| EV3 | 170 | | |
| EV4 | 90 | | |
| Route Number | Distance | End of Previous Day's Charging | Start of Next Day's Charging |
| 0 | 90 | 03:00 | 08:00 |
| 1 | 170 | 04:00 | 07:00 |
| 2 | 160 | 05:00 | 15:00 |
| 3 | 110 | 05:00 | 16:00 |
| 4 | 90 | 06:00 | 15:00 |
| 5 | 50 | 10:00 | 20:00 |
| 6 | 167 | 11:00 | 21:00 |
| 7 | 180 | 13:00 | 22:00 |
| 8 | 110 | 15:00 | 23:00 |
| 9 | 95 | 16:00 | 23:00 |

Table 3 shows the output data generated by the day-ahead logistic block 8 (again, times are given in the twenty-four hour clock):

Table 3: Output data for day-ahead logistic block planning

| EV ID | Total Distance (km) | Start of Stay in Parking Slot | End of Stay in Parking Slot | Route Allocation | Parking Slot Allocation |
|---|---|---|---|---|---|
| EV0 | 167 | 11:00 | 21:00 | 6 | 3 |
| EV1 | 160 | 15:00 | 15:00 | 2 | 1 |
| EV2 | 170 | 04:00 | 07:00 | 1 | 0 |
| EV3 | 110 | 15:00 | 23:00 | 8 | 4 |
| EV4 | 90 | 06:00 | 15:00 | 4 | 2 |

Executing the day-ahead logistic block 8 therefore comprises solving the multi-objective problem defined above and outputting the result to the day-ahead planner block 9.

Stage 2: Day-ahead planner block 9

There are two possibilities for implementing the day-ahead planner block 9. The first is to use a model of continuous charging (as this might be forced by the charger technology) and battery balancing, such that power delivery remains uninterrupted throughout a charging session (otherwise setting the charger power setpoint to 0 causes the charging session to be dropped), and the second is to use a model of non-continuous charging and battery balancing, which takes into account that charger technology may allow the power level to drop to zero during charging, enabling intermittent charging. This latter model also offers more flexibility in terms of redistributing power, potentially enabling a lower peak power and lower operating cost to be achieved.

*Continuous Charging and Battery Balancing Model*

In this model, the primary constraints and objective functions are designed to maintain a continuous power level. The optimisation objectives include charging cost minimisation (Equation 12 - load shifting):

$$\min \sum_{t \in T} PD_t * d * \gamma_t$$

and load balancing (Equation 13):

$$\min \max_{t \in T} PD_t$$

Where $t$ is a time slot, $T$ is the set of all time slots, d is the duration of a time slot (discretised to enable a detailed temporal analysis) and $D_t$ is the set of all time slots. In energy markets in which a consumer is billed for all usage based on the maximum power peak over a period, the load balancing objective may reduce EV fleet charging depot operating costs significantly.

However, both optimisation objectives are subject to a set of constraints designed to ensure the feasibility of the charging schedules generated, and take into account the overall characteristics of the EVs, chargers and EV fleet charging depot infrastructure. The total grid power set point for each time slot is calculated using Equations 14 and 15:

$$PD_t = \sum_{cg \in Cg} PCg_{cg,t} + \sum_{ev \in EV} f(NEV_{ev}, PEVR_{ev}, S_{ev.t}) \quad \forall t \in T$$

$$PD_t \leq Cap^d \quad \forall t \in T$$

**where** $C_a$ is an available charger, R is the set of all routes, P is the set of all parking slots and $S_{ev,t}$ is set to a value of 1 if an *ev* in the set of *EVs* is charging at a time slot $t$ in the set of time slots $T$, and set at a value of 0 otherwise. The function $f$ represents a comprehensive assessment of each EV's battery charging status, the balancing power requirement, and the number of balancing slots required, which are specific to the battery characteristics of each EV. This function returns the balancing status and power set point for each EV at each time slot $t$, capturing the behaviour of EV battery charging and balancing. For each EV battery, it is assumed that an estimated initial SoC value at the start of the charging process ( $SoC_{ev}^{initial}$ ) is provided as an input and the required SoC value at the end of the charging process ( $SoC_{ev}^{final}$ ) for the next trip has been calculated given the trip distance (assuming 1kWh per km), such that ensuring the EV batteries are charged to the level necessary to complete the next allocated route is given by Equation 16:

$$SoC_{ev,T} = SoC_{ev}^f, SoC_{ev,0} = SoC_{ev}^s \quad \forall ev \in EV$$

where s is the last time slot $t$. The battery SoC at each time slot based on the assigned charging connector (since each EV charger may have multiple connectors, splitting the available power between them) is calculated using Equations 17 and 18, with Equation 19 making sure that an EV battery cannot be charged when it is not in the EV fleet charging depot:

$$PEV_{ev,t} = Ch_{eff} * PCEV_{ev,t} + ES_{eff} * PEEV_{ev,t} \quad \forall ev \in EV, t \in$$

$$SoC_{ev,t+1} = SoC_{ev,t} + PEV_{ev,t} * {}^d/_{Cap^{ev}} \quad \forall ev \in EV, t \in T - t_n$$

$$PEV_{ev,t} \leq A_{ev,t} * PEV_{ev}^{max} \quad \forall ev \in EV, t \in T$$

Where A represents the availability of n EV for charging, and has the value of 1 if the EV is available for charging and a value of 0 otherwise. It is also necessary to ensure that each EV is only assigned to a single charging connector $c$, and this is taken care of by Equation 20:

$$\sum_{cn \in C} EV2Cn_{ev,cn} = 1 \quad \forall ev \in EV, \forall cn \in Cn$$

Only one EV can be connected to a charging connector at a time, as indicated in Equation 21:

$$\sum_{ev \in EV} S_{ev,t} * EV2Cn_{ev,cn} \leq 1 \quad \forall cn \in Cn, t \in T$$

Equations 22 and 23 calculate the charging connector and charger power set points (Q) based on the charging requirements of the assigned EV:

$$QCg_{cg,t} = \sum_{cn \in cg_{cn}} QCn_{cn,t} \quad \forall t \in T, cg \in Cg$$

$$QCn_{cn,t} = \sum_{ev \in EV} QEVC_{ev,t} * EV2Cn_{b,cn} \quad \forall t \in T, cn \in Cn$$

An essential set of constraints from an operational perspective is to model continuous charging to eliminate any gaps occurring within the charging time slots, as in Equations 24, 25 and 26 below. If the power set point becomes zero during charging then some chargers may automatically terminate the charging process. In addition, the variable $S_{ev.t}$ can also be used to control the overall number of charging time slots:

$$S_{ev,t} \leq A_{ev,t} \quad \forall ev \in EV, t \in T$$

$$S_{ev,t} \geq \frac{QEV_{ev,t}}{QEV_{ev}^{max}}, S_{ev,t} \leq QEV_{ev,t} * QEV_{ev}^{max} \quad \forall ev \in EV, t \in T$$

$$\sum_{t \in T - t_n} \left| S_{ev,t} - S_{ev,t+1} \right| = 2 \quad \forall ev \in EV$$

An energy supply (ES) dispatch limit and power set point calculation are provided by Equations 27, 28 and 29:

$$\sum_{ev \in EV} ESEV_{ev,t} \leq QE^{max} \quad \forall t \in T$$

$$SoCE_0 = SoC_e^s, SoCE_T \geq SoC_e^{min}$$

$$SoCE_{t+1} = SoCE_t^{start} - \left( \sum_{ev \in EV} ESEV_{ev,t} \right) * \frac{d}{Cap^e} \quad \forall t \in T - t_n$$

Balancing of the battery storage of each EV should be scheduled with reduced input power (depending on the battery type and requirement) after the charging cycle is completed. Figure 2 is a schematic representation of the availability, scheduled charging and balancing of an EV in a continuous charging approach. The availability $A_{ev_1,t}$, scheduled charging slots $S_{ev_1,t}$ and balancing slots $BS_{ev_1,t}$ are illustrated as individual timeslots $t$. A timeslot that indicates the availability of the EV is shown as a cross-hatched area, a timeslot that indicates that an EV is charging is shown as a dotted area and a timeslot that indicates that balancing is taking place is shown as a lined area. Each timeslot that has a fill factor has a binary value of 1 and each timeslot without a fill factor has a binary value of 0. Since the scheduled charging $S_{ev_1,t}$ is a binary variable, determining the last timeslot of balancing is equivalent of finding the maximum of production of the timeslot number $t$ and $S_{ev_1,t}$ shown in Equation 30 below:

$$S_{ev}^{max} = Max_{t \in T}\left(t * S_{ev,t}\right) \quad \forall ev \in EV$$

It is also necessary to avoid scheduling charging and balancing at the same time, as taken care of by Equation 31:

$$S_{ev,t} + BS_{ev,t} \leq 1 \quad \forall ev \in EV, t \in T$$

Then, to enforce the required number of balancing timeslots required for an EV, Equation 32 is used, along with Equation 33 to ensure that the balancing is continuous and only happens when the EV is available in the depot (Equation 34):

$$\sum_{t \in T} BS_{ev,t} = N_{ev}^{BS} \quad \forall ev \in EV$$

$$\sum_{t \in T-1} \left|BS_{ev,t} - BS_{ev,t+1}\right| = 2 \quad \forall ev \in EV$$

$$BS_{ev,t} \leq A_{ev,t} \quad \forall ev \in EV, t \in T$$

Finally, it is also necessary to make certain that balancing only begins when the charging to a required SoC has been completed, as shown in Equation 35:

$$\sum_{t \in T} t * BS_{ev,t} = N_{BS} * (S_{ev}^{max} + 1) + N_{BS} * \frac{(N_{BS}1)}{2} \quad \forall ev \in EV$$

Following this it is possible to re-write Equation 14 above as Equation 36:

$$QD_t = \sum_{cg \in Cg} QCg_{cg,t} + \sum_{ev \in EV} BS_{ev,t} * QEVR_{ev} \quad \forall t \in T$$

as the final function $f$ for continuous EV battery charging.

*Non-Continuous Charging and Battery Balancing*

The main difference between this approach and the continuous charging and battery balancing approach laid out above is that assumption that an EV charger possesses the capability to switch the power set point to zero in the middle of a charging or balancing cycle without dropping the charging session, thus creating the possibility of non-continuous charging and non-continuous balancing. In addition, this approach includes a comprehensive EV battery charging profile model to take into account the manner in which an EV battery charge is increased over time during charging.

Figure 3 is a schematic representation of the availability, scheduled charging and balancing of an EV in a non-continuous charging approach. A grid G of timeslots $t$ for a first EV $EV_m$ and a second EV $EV_n$ is shown. Timeslots where no charging or balancing takes place are shown without a form fill. Timeslots in which charging takes place are shown with a cross-hatched form fill, and timeslots in which balancing takes place are shown with a dotted form fill. In addition, each timeslot is provided with a binary value of 1 or 0 indicating whether there is charging/balancing in progress (binary value 1) or whether the charging/balancing has been interrupted by the power set point being reduced to zero (binary value 0).

$S_{EV_m}^{max}$, $S_{EV_n}^{max}$, $BS_{EV_m}^{max}$, and $BS_{EV_n}^{max}$, are also indicated at the appropriate points where the SoC and balancing are reached.

To make such a model work, both the charging $S_{ev,t}$ and balancing $SB_{ev,t}$ binary functions can be set to a value of 1 only if the EV is available at the EV fleet charging depot (Equation 37) and only if there is a flow of power from the charging connector the EV is connected to (Equation 38):

$$S_{ev,t} \leq A_{ev,t}, BS_{ev,t} \leq A_{ev,t} \quad \forall ev \in EV, t \in T$$

$$S_{ev,t} \geq \frac{PowerEV_{ev,t}^{in}}{PowerEVmax_{ev}^{in}}, S_{ev,t} \leq PowerEV_{ev,t}^{in} * PowerEVmax_{ev}^{in} \quad \forall ev \in EV, t \in T$$

The last timeslot of charging to $S_{ev}^{max}$ when the EV battery reaches the desired SoC is indicated in Equations 39 and 40:

$$S_{ev}^{max} \geq S_{ev,t} * t \quad \forall ev \in EV, t \in T$$

$$S_{ev}^{max} \leq S_{ev,t} * t + T * W_{ev,t}^S, \sum_{t \in T} W_{ev,t}^S = T - 1 \quad \forall ev \in EV, t \in T$$

Similarly, the last timeslot of balancing to $SB_{ev}^{max}$ is indicated in Equations 41 and 42:

$$BS_{ev}^{max} \geq BS_{ev,t} * t \quad \forall ev \in EV, t \in T$$

$$BS_{ev}^{max} \leq BS_{ev,t} * t + T * W_{ev,t}^{BS}, \sum_{t \in T} W_{ev,t}^{BS} = T - 1 \quad \forall ev \in EV, t \in T$$

A further constraint is to ensure that balancing takes place after the charging session is complete, as shown in Equation 43:

$$S_{ev}^{max} + 1 \leq t + 0.001 - M * \delta, S_{ev}^{max} + 1 \leq t + (1 - \delta) * M, BS_{ev,t} \leq \delta$$

It should also be borne in mind that EV chargers may work in a sequential fashion, such that power is provided to charging connectors alternately. Since only one charging connector can be provided with power at a given time, a charging session taking place at this charging connector should be completed before power is provided to the other charging connector by the charger and a charging session is initiated for another EV. In the example of Figure 3, $EV_m$ and $EV_n$ are assigned to a sequential charger, with priority given to $EV_m$ due to its earlier arrival time. This is taken care of in Equation 44:

$$BS_{ev}^{max} + 1 \leq t + 0.001 - M * \delta_b, BS_{ev}^{max} + 1 \leq t + (1 - \delta_b) * M, S_{EV_n,t} \leq \delta_b$$

Finally, the required number of balancing timeslots needs to be considered (Equation 45) and the constraint that balancing only happens after charging is complete included (Equation 46):

$$\sum_{t \in T} W_{ev,t}^{BS} = N_{BS} \quad \forall ev \in EV$$

$$\sum_{t \in T} BS_{ev,t} * t = N^{balancing} * S_{ev}^{max} + N^{balancing} * \left( N^{balancing} + 1 \right)/2$$

By considering all of the constraints laid out above, the two options of continuous and non-continuous charging can be built into the day-ahead planner block 9. However, a further addition is a battery charging profile model, which takes into account the real-time behaviour of EV batteries during the charging process, and is discussed in more detail below.

*Battery Charging Profile Model*

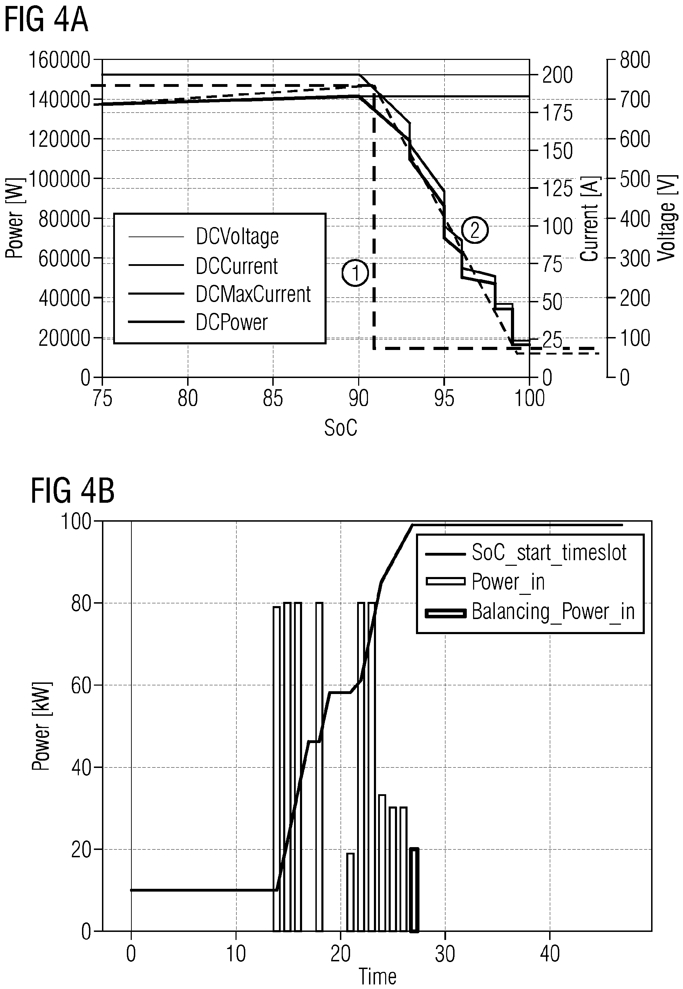

Figure 4a is a chart illustrating an EV battery charging profile based on data from an EV charger during use, and Figure 4b is a chart showing a modelled EV battery charging profile based on the data in Figure 4a. Figure 4a is generated based on the characteristics of the Battery Energy Storage System (BESS) and Battery Management System (BES), using a linear model to represent the curve of Figure 4a in the day-ahead planner block 9. The linear model comprises two concepts:

- Voltage increases with SoC, with an increasing gradient at high SoC (>90%), with the overall increase dependent on battery type;
- DC current (and therefore power) drops at around 90% SoC or approximately 710V linearly with SoC from a maximum (DCMaxCurrent) to zero. This behaviour is enforced by the BMS to protect the BESS from excessive voltage and degradation at very high SoC.

Both sections of the charging curve may be approximated using linear functions, with a first linear function exhibiting a positive slope from the initial SoC until a breakpoint (indicated as a broken line on Figure 4b), and a second linear function with a negative slope from the breakpoint to 100% SoC (indicated as a dashed line on Figure 4b). Capturing this behaviour may be done using a step function model and a two-slope model. The step function model is shown in Equations 47 to 49 below:

$$SoC_{ev,t}^{start} \geq SoC_{ev}^{break} + eps - \left(1 - \delta_{ev,t}^{break}\right) \quad \forall ev \in EV, t \in T$$

$$SoC_{ev,t}^{start} \geq SoC_{ev}^{break} + M * \delta_{ev,t}^{break} \quad \forall ev \in EV, t \in T$$

$$PowerEV_{ev,t}^{in} \leq PowerLimit_{ev}^{break} + M * \left(1 - \delta_{ev,t}^{break}\right) \quad \forall ev \in EV, t \in T$$

with the two slope charging model shown in Equations 50 to 52 below:

$$\left[K_{ev}^{maxBefore} + L_{ev}^{maxBefore} * SoC_{ev,t}^{start}\right] - M * \left(1 - \delta_{ev,t}^{break}\right) \leq P_{ev,t}^{max}$$
$$\leq \left[K_{ev}^{maxBefore} + L_{ev}^{maxBefore} * SoC_{ev,t}^{start}\right] + M * \left(1 - \delta_{ev,t}^{break}\right), \quad \forall ev \in EV, t \in T$$

$$\left[K_{ev}^{maxAfter} + L_{ev}^{maxAfter} * SoC_{ev,t}^{start}\right] - M * \left(1 - \delta_{ev,t}^{break}\right) \leq P_{ev,t}^{max}$$
$$\leq \left[K_{ev}^{maxAfter} + L_{ev}^{maxAfter} * SoC_{ev,t}^{start}\right] + M * \left(1 - \delta_{ev,t}^{break}\right), \quad \forall ev \in EV, t \in T$$

$$PowerEV_{ev,t}^{in} \leq P_{ev,t}^{max}, \quad \forall ev \in EV, t \in T$$

K and L are input parameters from the data analytics indicating the input power at each charging connector cg used in generating the chart in Figure 4a, with the equations above used to generate the line in Figure 4b. Figure 4b also shows the power input and balancing power input during the charging cycle.

Combining the elements of the day-ahead logistic block 8 and the day-ahead planner block 9 leads to an optimum charging schedule that is output to an EV fleet or EV charging depot operational control. Executing the day-ahead planner block 9 therefore comprises, based on the input from the day-ahead logistic block, either: executing a continuous charging and cell balancing model and a battery charging profile model; or executing a non-continuous charging and cell balancing mode and a battery charging profile model.

The Triggering Algorithm

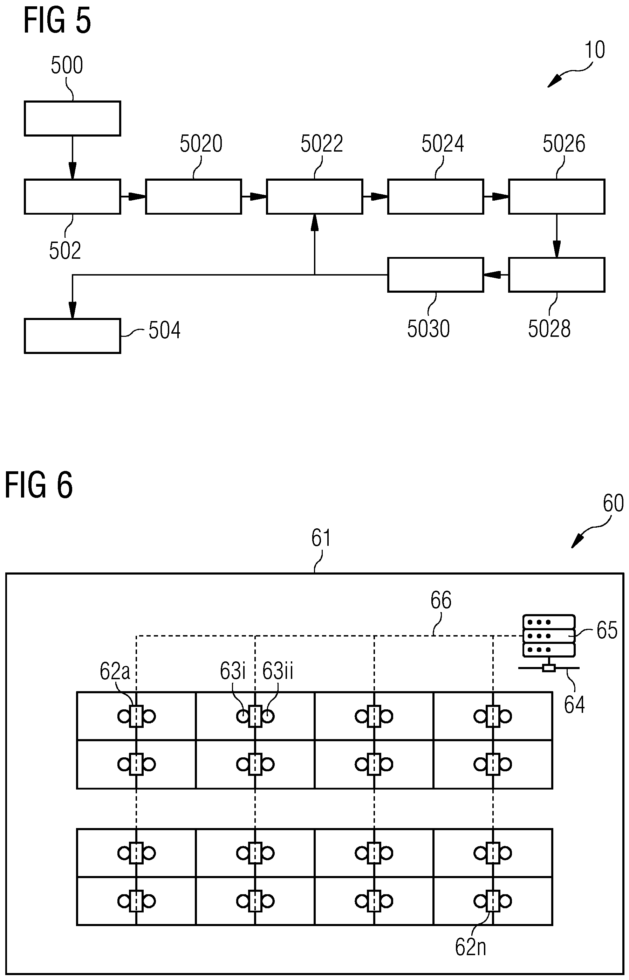

Figure 1 also illustrates the use of a triggering algorithm 10 to trigger the intra-day re-planner based on real-time events received from the EV charging depot. These include the arrival time of an EV at the EV charging depot (in case of delays), maintenance requirements of an EV (that may affect the charging scheduling) and the arrival SoC (which may differ from an expected SoC due to traffic and weather conditions or unforeseen events). The triggering algorithm 10 is illustrated in Figure 5. Figure 5 is a schematic illustration of a triggering algorithm for triggering a day re-planner. Re-planning is triggered in discrete timeslots occurring once every x minutes, where x is chosen based on the EV fleet size, and may be a constant or variable value throughout the day. For example, a large EV fleet may need to trigger replanning every minute during busy times (such as post-rush hour) and every five minutes otherwise, and a small EV fleet may only need to trigger re-planning every ten minutes as there are fewer arrivals at the EV charging depot.

The triggering algorithm 10 begins at step 500 by checking the real-time depot charging configuration at set time intervals. Next, at step 502, if the real-time depot charging configuration deviates from the balanced charging schedule above a pre-determined threshold, the execution of an intra-day re-planner block for determining event-based charging schedule adjustments is triggered. Preferably, the threshold is a percentage value of SoC, deviation from which indicates that the EV charging schedule will no longer be viable. At step 504, the optimum charging configurations and balanced depot charging schedule are adjusted on the basis of the event-based charging schedule adjustments. Checking the real-time depot charging configuration comprises collecting data regarding the time of an EV arrival, the actual state of charge (SoC) of the EV battery system and a status of the EV charger and connector scheduled for use by the EV. Triggering the execution of the intra-day re-planner block comprises, at step 5020, determining the EVs affected by the deviation between the real-time charging configuration and the balanced charging schedule. The data required to determine rescheduling and charging infrastructure reconfiguration requirements is prepared at step 5022, with the intra-day planner being called at step 5024 for execution on the basis of the prepared data. Executing the intra-day re-planner block begins at step 5026 by determining event-based charging schedule adjustments and charging infrastructure configuration adjustments on the basis of the prepared data. Then, at step 5028 the schedule and configuration adjustments are checked to determine whether they overcome the deviation between the real-time charging configuration and the balanced charging schedule and charging infrastructure configurations for the affected EVs. If the schedule adjustments do not overcome the deviation, a feedback loop is executed by exiting the intra-day re-planner block at step 5030 and returning to step 5022 to revise the data required to determine rescheduling and charging infrastructure reconfiguration requirements. Then step 5026 is re-executed by recalling the intra-day re-planner block and executing on the basis of the revised data. This feedback loop is repeated until the deviation between the real-time charging configuration and the balanced charging schedule and charging structure infrastructure configurations is minimised to below the pre-determined threshold.

An example of a triggering event is illustrated in Table 4:

Table 4: Triggering event example

| Event | Action | Scenario |
|---|---|---|
| SoC on arrival lower than expected | Re-planning for affected EVs based on SoC threshold | SoC less than or equal to deviation threshold: EV is added to replanning list along with other affected EVs SoC is greater than deviation threshold: no action required |
| SoC on arrival higher than expected | No action required | |

The event-based intra-day re-planning approach requires a number of constraints to be considered. These include:

- Re-planning should be done for every EV that is not connected to an EV charger;
- Re-planning should be done for every EV that is connected to an EV charger but for which charging has not yet started;
- Re-planning should be done for all EVs/chargers that exhibit a triggering event;
- Re-planning is done every thirty minutes if a triggering event is available;
- All known EVs in the fleet must be considered even if not scheduled for charging or allocated a route.

There are also a number of general assumptions for re-planning:

- The EV connector mapping may change during re-planning;
- Re-planning of the entire fleet should be avoided as much as possible;

- If a first EV should be charged before a second EV, this should also be factored into the re-planning;
- There will be EVs that are not in the charging schedule nor allocated a route for that day;
- There should be fully charged and balanced EVs that are not in the charging schedule nor allocated a route for that day;
- EVs not in use but available ("spare" EVs) should be known and identified;
- Shunting times between arrival and connecting and charging as well as disconnecting and departing are implemented;
- The timeslot duration of the day-ahead planning is independent of the time-slot duration of the day-ahead re-planning; and
- A waiting time should be defined for re-planning.

Although the day-ahead re-planning involves the above-mentioned constraints and assumptions, it should be noted that the model used for day-ahead re-planning is the same model as that used for the day-ahead planning with only a subset of EVs and chargers.

Figure 6 is a schematic overview of an electric vehicle (EV) fleet depot charging system in accordance with embodiments of the present invention. The EV fleet depot charging system 60 is installed within an EV fleet depot 61 and comprises a plurality of EV chargers 62a...62n. Each charged *62a...62n* is provided with two charging connectors 63i, 63ii, which may execute sequential or simultaneous charging. The EV chargers 62a...62n themselves are positioned to accommodate two parking spaces enabling access to the charging connectors 63i, 63ii. A server 64 hosts a computer-implemented scheduling platform 65 for scheduling EV charging in the depot 61 as described above. A communications network 66 is provided, with the plurality of EV chargers 62a...62n and the server 64 being connected in a network by, and adapted to exchange data via, the communications network 66. Preferably, the server 64 is a cloud server or distributed computing system. The scheduling platform 65 is accessible from either an EV fleet charging depot or control centre, as desired.

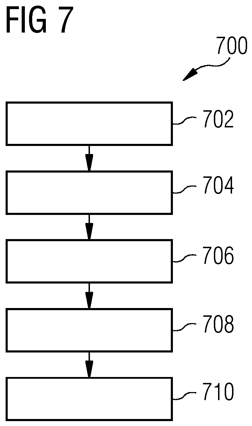

Figure 7 illustrates a method of infrastructure planning for an Electric Vehicle (EV) charging depot in accordance with embodiments of the present invention. The method 700 comprises, as a first step 702, defining a set of pre-determined operating parameters including the number of EVs to be charged and the available charging infrastructure, as outlined above. Then, at step 704; a day-ahead logistic block 8 for determining physical access to charging infrastructure is executed. Next, a day-ahead planner block 9 is executed to determine a balanced depot charging configuration at step 706. This comprises charging scheduling and load management based on EV battery charging profiles, EV charging requirements and charging infrastructure restrictions. For example, these include issues such as EV fleet charging depot size, number and configuration of EV chargers and power grid and price restrictions. At step 708, a balanced depot charging schedule for the EV charging depot is output, wherein the schedule includes the overall optimum configuration of charging infrastructure for the EV charging depot at any one time for the pre-defined operating parameters. These are those discussed in relation to the MILP model outlined and implemented above. Finally, the required grid connection for the balanced depot charging schedule for the EV charging depot is determined at step 710. Determining the grid connection requirements enables the planning of an EC fleet charging depot in terms of footprint, capacity, access and any required alterations to the local electricity grid structure.

**Claims**

1.  A computer-implemented scheduling platform for an electric vehicle (EV) fleet charging depot, based on a set of pre-defined operating parameters and input parameters, comprising:

    executing a day-ahead logistic block for determining physical access to charging infrastructure;
    executing a day-ahead planner block, for determining a balanced depot charging configuration, comprising charging scheduling and load management based on EV battery charging profiles, EV charging requirements and charging infrastructure restrictions; and
    outputting a balanced depot charging schedule for the EV charging depot, wherein the schedule includes the overall optimum configuration of charging infrastructure for the EV charging depot at any one time for the pre-defined operating parameters and input parameters;
    wherein the scheduling method implements a mixed-integer linear programming (MILP) model.

2.  A computer-implemented method as claimed in claim 1, wherein executing the day-ahead logistic block comprises defining the physical access to charging infrastructure as a multi-objective problem as a series of linear equations and a set of linearised non-linear constraints.

3. A computer-implemented method as claimed in claim 2, wherein executing the day-ahead logistic block further comprises solving the multi-objective problem and outputting the result to the day-ahead planner block.

4. A computer-implemented method as claimed in claim 3, wherein executing the day-ahead planner block comprises: based on the input from the day-ahead logistic block:

   executing a continuous charging and cell-balancing model; and
   executing a battery charging profile model.

5. A computer-implemented method as claimed in claim 3, wherein executing the day-ahead planner block comprises: based on the input from the day-ahead logistic block:

   executing a non-continuous charging and cell-balancing model; and
   executing a battery charging profile model.

6. A computer-implemented method as claimed in any of claims 1 to 5, further comprising:

   checking the real-time depot charging configuration at set time intervals;
   if the real-time depot charging configuration deviates from the balanced charging schedule above a pre-determined threshold, triggering the execution of an intra-day re-planner block for determining event-based charging schedule adjustments, and
   adjusting the optimum charging configurations and balanced depot charging schedule on the basis of the event-based charging schedule adjustments.

7. A computer-implemented method as claimed in claim 6, wherein checking the real-time depot charging configuration comprises collecting data regarding the time of an EV arrival, the actual state of charge (SoC) of the EV battery system and a status of the EV charger and connector scheduled for use by the EV.

8. A computer-implemented method as claimed in claim 6, wherein the triggering the execution of the intra-day re-planner block comprises:

   determining the EVs affected by the deviation between the real-time charging configuration and the balanced charging schedule;
   preparing data required to determine rescheduling and charging infrastructure reconfiguration requirements; and
   calling the intra-day planner for execution on the basis of the prepared data.

9. A computer-implemented method as claimed in claim 8, wherein the execution of the intra-day re-planner comprises:

   determining event-based charging schedule adjustments and charging infrastructure configuration adjustments on the basis of the prepared data;
   checking whether the schedule and configuration adjustments overcome the deviation between the real-time charging configuration and the balanced charging schedule and charging infrastructure configurations for the affected EVs.

10. A computer-implemented method as claimed in claim 9, wherein if the schedule adjustments do not overcome the deviation, the method further comprises:
    executing a feedback loop comprising:

    exiting the intra-day re-planner block;
    revising the data required to determine rescheduling and charging infrastructure reconfiguration requirements; and
    recalling the intra-day re-planner block and executing on the basis of the revised data.

11. A computer-implemented method as claimed in claim 10, wherein the method further comprises repeating the feedback loop until the deviation between the real-time charging configuration and the balanced charging schedule and charging structure infrastructure configurations is minimised to below the pre-determined threshold.

12. A computer-implemented method as claimed in any preceding claim, wherein the input parameters are the physical and operational attributes of a fleet of EVs operating from the EV charging depot.

13. A computer-implemented method as claimed in any preceding claim, wherein the operating parameters comprise the number of EVs to be charged and the available charging infrastructure.

14. A computer-implemented method as claimed in any preceding claim, wherein the EV is a public service vehicle.

15. An electric vehicle (EV) fleet depot charging system, comprising:

> a plurality of EV chargers;
> a communications network; and
> a server hosting a computer-implemented scheduling platform for scheduling EV charging in the depot as claimed in any of claims 1 to 14,
> wherein the plurality of EV chargers and the server are connected in a network by, and adapted to exchange data via, the communications network.

16. An electric vehicle (EV) fleet depot charging system as claimed in claim 15, wherein the server is a cloud server or distributed computing system.

17. A method of infrastructure planning for an Electric Vehicle (EV) charging depot, comprising:

> defining a set of pre-determined operating parameters including the number of EVs to be charged and the available charging infrastructure;
> executing a day-ahead logistic block for determining physical access to charging infrastructure;
> executing a day-ahead planner block, for determining a balanced depot charging configuration, comprising charging scheduling and load management based on EV battery charging profiles, EV charging requirements and charging infrastructure restrictions; and
> outputting a balanced depot charging schedule for the EV charging depot, wherein the schedule includes the overall optimum configuration of charging infrastructure for the EV charging depot at any one time for the pre-defined operating parameters;
> determining the required grid connection for the balanced depot charging schedule for the EV charging depot;
> wherein the scheduling method implements a mixed-integer linear programming (MILP) model.

## FIG 1

## FIG 2

$S_{ev}^{max}$

$t$

$A_{ev_1, t}$

$S_{ev_1, t'}$

$BS_{ev_1, t'}$

## FIG 3

| t | 0 | 1 | 2 | 3 | 4 | 5 | 6 | 7 | 8 | 9 | 10 | 11 | 12 | 13 | 14 | 15 | 16 | 17 | 18 |
|----|---|---|---|---|---|---|---|---|---|---|----|----|----|----|----|----|----|----|----|
| $ev_m$ | 0 | 1 | 0 | 1 | 1 | 1 | 0 | 1 | 0 | 0 | 0 | 0 | 0 | 0 | 0 | 0 | 0 | 0 | 0 |
| $ev_n$ | 0 | 0 | 0 | 0 | 0 | 0 | 0 | 0 | 1 | 1 | 0 | 1 | 1 | 1 | 1 | 0 | 0 | 0 | 0 |

$S_{EV_m}^{max}$   $BS_{EV_m}^{max}$   $S_{EV_n}^{max}$   $BS_{EV_n}^{max}$

## FIG 4A

## FIG 4B

FIG 5

500

5020    5022    5024    5026

502

504    5030    5028

FIG 6

10

60

61

66

65

62a    63i  63ii    64

62n

FIG 7

| | Europäisches Patentamt European Patent Office Office européen des brevets | **EUROPEAN SEARCH REPORT** | **Application Number** EP 25 15 4945 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 350 589 A1 (TATA CONSULTANCY SERVICES LTD [IN]) 10 April 2024 (2024-04-10) | 1-13, 15-17 | INV. G06Q10/04 |
| Y | * paragraph [0007] - paragraph [0053] * ----- | 14 | B60L53/64 B60L53/67 |
| Y | LUKE JUSTIN ET AL: "Optimal coordination of electric buses and battery storage for achieving a 24/7 carbon-free electrified fleet", APPLIED ENERGY, ELSEVIER SCIENCE PUBLISHERS, GB, vol. 377, 7 October 2024 (2024-10-07), XP087643398, ISSN: 0306-2619, DOI: 10.1016/J.APENERGY.2024.124506 [retrieved on 2024-10-07] | 14 | B60L53/68 G06Q10/06 G06Q10/0631 G06Q50/00 G06Q50/06 H02J7/00 |
| A | * the whole document * ----- | 1-13,15, 17 | |

TECHNICAL FIELDS SEARCHED (IPC)

G06Q
H01M
H02J
B60L

The present search report has been drawn up for all claims

| Place of search | Date of completion of the search | Examiner |
|---|---|---|
| The Hague | 21 July 2025 | Mas Tur, Elena |

EPO FORM 1503 03.82 (P4C01)

## ANNEX TO THE EUROPEAN SEARCH REPORT
## ON EUROPEAN PATENT APPLICATION NO.

EP 25 15 4945

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | | Publication date | Patent family member(s) | Publication date |
|---|---|---|---|---|
| EP 4350589 | A1 | 10-04-2024 | EP 4350589 A1 | 10-04-2024 |
| | | | US 2024140244 A1 | 02-05-2024 |

EPO FORM P0459

For more details about this annex : see Official Journal of the European Patent Office, No. 12/82